# EUROPÄISCHE PATENTSCHRIFT

(11) **EP 0 651 218 B1**
(45) Veröffentlichungstag und Bekanntmachung des Hinweises auf die Patenterteilung: **16.07.1997**
(21) Anmeldenummer: 94116326.3
(22) Anmeldetag: 17.10.1994
(51) Int. Cl.: F26B 17/04, B01D 33/66

(54) **Vorrichtung zum kontinuierlichen Filtrieren und Trocknen einer Feststoffsuspension**
Device for continuous filtering and drying a suspension of solids
Dispositif pour la filtration et le séchage continu d'une suspension de solides

(30) Priorität: 28.10.1993 DE 4336736
(43) Veröffentlichungstag der Anmeldung: 03.05.1995
(73) Patentinhaber: BAYER AG, 51368 Leverkusen (DE)
(72) Erfinder: Gehrmann, Dietrich, Dr., D-51381 Leverkusen (DE); Schweigler, Norbert, Dr., D-51373 Leverkusen (DE)

(56) Entgegenhaltungen:
- EP-A- 0 465 950
- EP-A- 0 465 951
- DE-A- 3 115 868
- DE-B- 1 604 922
- CHEMIE INGENIEUR TECHNIK, Bd.41, Nr.11, 1969, WEINHEIM, DE Seite 783

## Beschreibung

Die Erfindung geht aus von einer Vorrichtung zum kontinuierlichen Filtrieren einer Feststoffsuspension und zum Trocknen des auf einem porösen Transportmedium verbleibenden Filterkuchens, wobei das Transportmedium durch ein Bandfilter und einen darauffolgenden Bandtrockner mit Heizeinrichtungen zur Wärmeeintragung in den Filterkuchen hindurchgeführt ist (siehe z.B. Chemie Ingenieur Technik, Bd. 41, Nr.11, 1969, Weinheim (DE), Seite 783).

Nach dem Stand der Technik werden für die mechanische Abtrennung der festen und der flüssigen Phase und für die thermische Behandlung des Filterrückstands einer Feststoffsuspension Filter und Trockner eingesetzt, wie sie z.B. in DE 2 754 386, DE 2 360 576 und DE 2 830 755 beschrieben sind. Diese Vorrichtungen, die im folgenden kurz als Filtertrockner bezeichnet werden, erlauben im allgemeinen die Abtrennung der zu entfernenden Stoffe durch eine Folge hintereinandergeschalteter Prozeßschritte in einem Apparat. Dieser Apparat beinhaltet die Filtration, die mechanische Entfeuchtung, die Waschung und thermische Trocknung.

Nachteilig an den bisher bekannten Filtertrocknern ist entweder ihre diskontinuierliche Arbeitsweise oder die unzureichende thermische Trocknung bei bestimmten Produkten. Bei einer kontinuierlichen Arbeitsweise, die auf der Hintereinanderschaltung von kontinuierlich betriebenen Apparaten, wie Filter, Zentrifugen und Trockner beruht, ist meist eine Übergabestufe in Form von Pumpen, Dosierschnecken etc. erforderlich. Der damit verbundene Ein- bzw. Austrag aus Zwischen- oder Pufferbehältern ist häufig mit Schwierigkeiten verbunden. Außerdem ist die Verteilung des feuchten Filterrückstandes auf dem Transportmedium des Trockners (Trocknerband) nicht immer gleichmäßig. Dies hat eine ungleichmäßige Trocknung zur Folge.

Bei einigen Produkten kommt es besonders darauf an, daß die Übergabe von der mechanischen Entfeuchtung zur thermischen Trocknung möglichst "sanft" geschieht. Darunter ist zu verstehen, daß das Produkt so wenig wie möglich mechanisch beansprucht wird, um einen Kornbruch und eine damit verbundene Staubbildung zu vermeiden.

Bei wasserfeuchten und/oder hygroskopischen Produkten ist die Verweilzeit in der Trocknungszone ein wesentliches Kriterium für den Einsatz von kontinuierlichen Filtertrocknern, da die Apparategröße in einem technisch sinnvollen Rahmen gehalten werden muß. Die auf dem Hindurchsaugen von nur mäßig warmer Luft beruhende konvektive Trocknung ist insbesondere bei Filterkuchen mit einer größeren Schichthöhe häufig nicht mehr ausreichend, um die geforderte Restfeuchte innerhalb einer vorgegebenen, sinnvollen Verweilzeit zu erreichen. Die Erzeugung von gleichmäßig ausgebildeten, niedrigen Filterkuchen, wie sie für eine kurze Trocknung vorteilhaft wäre, wird u.a. nur unzureichend beherrscht.

Der wesentliche Bestandteil eines kontinuierlichen Filtertrockners ist ein umlaufendes poröses Transportmedium, das sowohl die Filtrations- als auch die Trocknerzone durchläuft. Die Aufgabe des zu behandelnden Produktes auf das Transportmedium erfolgt mittels bekannter Dosiervorrichtungen. Nach dem Verlassen der Trocknungszone wird das Produkt vom Transportmedium durch einfaches Umlenken und/oder Schaber abgenommen. Die bisher bekannten technischen Lösungen haben den Nachteil, daß sie meist nur für lösungsmittelfeuchte und gut trockenbare Produkte einsetzbar sind.

Hier setzt die Erfindung an. Es lag die Aufgabe zugrunde, einen kombinierten Apparat zur Filtration und Trocknung von Feststoffsuspensionen zu entwickeln, bei dem allenfalls nur eine geringe thermische und mechanische Beanspruchung des Produktes erfolgt, so daß auch empfindliche Produkte ohne Qualitätseinbuße behandelt bzw. hergestellt werden können. Ferner soll die Apparatur einen niedrigen spezifischen Grundflächenbedarf haben und eine möglichst große Flexibilität hinsichtlich Ergänzungen und Erweiterungen aufweisen.

Diese Aufgabe wird durch ein Bandfilter in Verbindung mit einem nachfolgenden Bandtrockner erfindungsgemäß dadurch gelöst, daß der Filterkuchen nach dem Verlassen des Bandfilters auf dem Transportmedium in Form einer schichtförmigen, gasdurchlässigen Feststoffschüttung mit einer Schichtdicke von maximal 50 mm, vorzugsweise maximal 20 mm, vorliegt und daß die Heizeinrichtungen im Bandtrockner einerseits aus einer oberhalb des Transportmediums angeordneten Heißgaskammer zur Erzeugung eines die Feststoffschüttung von oben nach unten durchströmenden Heißgases und andererseits aus einem oder mehreren ober- und/oder unterhalb des Transportmediums angeordneten Kontaktheizelementen bestehen.

Vorzugsweise besteht das Kontaktheizelement aus einem oberhalb des Transportmediums umlaufenden, mit der Feststoffschüttung in Kontakt stehenden, perforierten Heizband.

Alternativ kann das Kontaktheizelement auch aus einem beheizten, oberhalb des Transportmediums angeordneten und senkrecht zum Transportmedium verfahrbaren perforierten Stempel bestehen. Anstelle eines Stempels können natürlich auch mehrere senkrecht zum Transportmedium verfahrbare Stempel vorgesehen werden.

Eine weitere Möglichkeit besteht darin, daß die Kontaktheizelemente aus beheizten, unterhalb des Transportmediums angeordneten, perforierten Filtratwannen bestehen, deren Oberflächen mit dem Transportmedium und damit auch indirekt mit der Feststoffschüttung in Kontakt stehen.

Schließlich können die Kontaktheizelemente auch aus beheizten, unterhalb des Transportmediums angeordneten Walzen bestehen, deren Oberflächen mit dem Transportmedium in Kontakt stehen. Eine weitere Verbesserung besteht darin, daß zwischen dem Bandfilter und dem Bandtrockner rechen- oder bürstenförmige Rakelelemente zur Auflockerung der Feststoffschüttung angebracht sind. Die Auflockerung kann aber auch durch die Kontaktheizelemente selbst erfolgen, die zu diesem Zweck aus oberhalb des Transportmediums angeordneten beheizten, in die Feststoffschüttung hineinragenden Lamellen bestehen.

Eine weitere Ausgestaltung besteht darin, daß in der Heißgaskammer Heizstrahler für eine zusätzliche Beheizung der Feststoffschüttung durch Strahlungswärme angeordnet sind.

Das Transportmedium für den Filterkuchen und das Heizband für die Kontaktheizung sind zweckmäßig aus einem bis zu Temperaturen von 230°C hochtemperaturbeständigen Material angefertigt.

Die gesamte Apparatur, d.h. das Bandfilter und der Bandtrockner einschließlich eventuell dazugehöriger Zusatzeinrichtungen, sind vorteilhaft in einem gemeinsamen druckfesten Gehäuse untergebracht.

Mit der Erfindung werden folgende Vorteile erzielt:
a) Es können verschiedene Trocknungsarten realisiert und insbesondere miteinander kombiniert werden (Kontakttrocknung, Konvektionstrocknung, Strahlungstrocknung). Durch eine produktgerechte Kombination verschiedener Trocknungsarten kann die Verdampfungsleistung gegenüber bekannten Filtertrocknern wesentlich gesteigert werden.
b) Der gleichmäßig ausgebildete und relativ niedrige Filterkuchen kann auch gleichmäßig und schonend getrocknet und somit effizienter entfeuchtet werden. Die Gefahr einer Produktschädigung durch zu hohe thermische Beanspruchung ist minimiert.
c) Die Trocknung kann durch Verwendung von hochtemperaturfesten Transportbändern (Transportmedium) bei höheren Temperaturen als bisher durchgeführt werden.
d) Die durch die Beheizung des Filterkuchens entstehenden Brüden können problemlos seitlich oder nach unten abgezogen werden. Die konvektive Durchströmungstrocknung kann außerdem praktisch staubfrei durchgeführt werden.
e) Die Apparatur bietet alle Voraussetzungen für eine Ausrüstung mit vollautomatischen Regeleinrichtungen auf der Basis der Messung der Zuluft-, Abluft- und Produkttemperatur.
f) Die Vorrichtung kann vielseitig für organische und anorganische Produkte, insbesondere für die Trocknung von oberflächenfeuchten Produkten, ebenso wie von mechanisch empfindlichen bzw. toxischen Produkten eingesetzt werden.
g) Aufgrund der gleichmäßigeren Entfeuchtung, Trocknung und gegebenenfalls auch Waschung und aufgrund eines geringeren Abriebs beim Transport wird eine höhere Produktqualität erzielt.
h) Eine weitere Verbesserung wird im Hinblick auf die Arbeitshygiene erzielt, da weniger Staub und weniger Dämpfe erzeugt werden.
i) Die hohe spezifische Trocknungsleistung führt zu einer deutlichen Kostensenkung (Investitions- und Betriebskosten). Aus dem gleichen Grund wird auch eine höhere Arbeitssicherheit erreicht, da mit relativ kleinen Apparatevolumina (Produkt hold-up) gearbeitet wird (geringeres Gefahrenpotential).
j) Ein weiterer Vorteil besteht darin, daß alle Prozeßschritte sowohl unter Druck als auch unter Vakuum durchgeführt werden können.
k) Weiterhin kann die erfindungsgemäße Apparatur modulartig nach dem Baukastenprinzip aufgebaut werden. Sie hat einen niedrigen spezifischen Grundflächenbedarf.
l) Zusatzeinrichtungen, z.B. für die mechanische Entfeuchtung, können problemlos eingebaut werden.

Im folgenden wird die Erfindung anhand von Zeichnungen und Ausführungsbeispielen näher erläutert.

Es zeigen schematisch:
- Fig. 1:: Den Aufbau eines kontinuierlichen Filtertrockners mit konvektiver Trocknung durch Heißluft und Kontakttrocknung mittels eines Heizbandes und gegebenenfalls beheizter Filtratwannen.
- Fig. 2:: Einen Filtertrockner mit konvektiver Trocknung und Heizstempeln als Kontaktheizelemente.
- Fig. 3:: Einen Filtertrockner mit konvektiver Trocknung und pflugscharähnlichen Heizelementen.
- Fig. 4:: Einen Filtertrockner mit konvektiver Trocknung und Walzenbeheizung und
- Fig. 5:: eine vergrößerte Darstellung des auf dem Transportband befindlichen Filterkuchens mit den walzenförmigen Kontaktheizelementen.

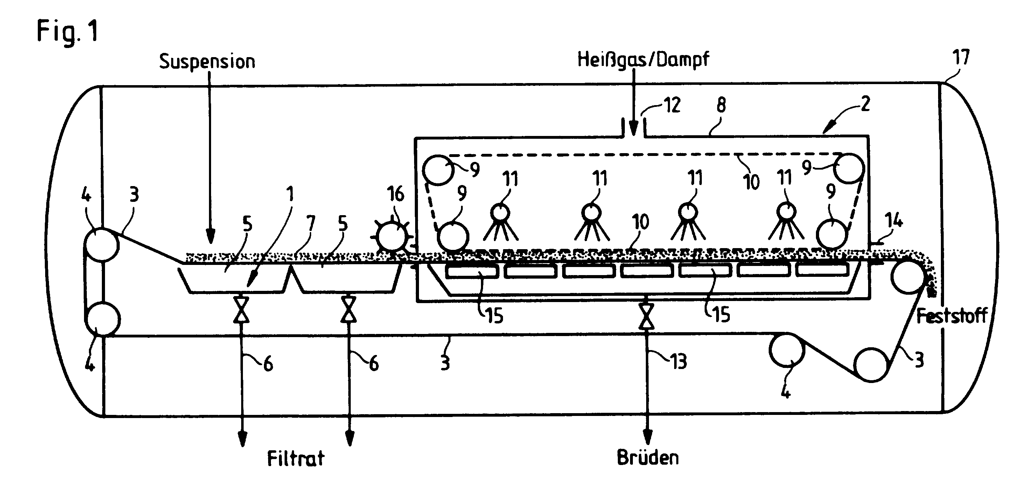

Der kombinierte Filtertrockner gemäß Fig. 1 besteht im wesentlichen aus dem Bandfilter 1 und dem nachgeschalteten Bandtrockner 2. Als Transportmedium dient ein perforiertes, umlaufendes Transportband 3, das durch das Bandfilter 1 und den Bandtrockner 2 hindurchgeführt ist. Die Führung des Transportbandes 3 erfolgt durch Umlenkwalzen 4.

Die zu behandelnde Feststoffsuspension wird im Bereich des Bandfilters 1 auf das Transportband 3 aufgegeben und anschließend filtriert. Die dosierte Aufgabe des Suspensionsvolumenstromes mit einem bekannten Feststoffgehalt auf die freie Filterfläche des Bandfilters erfolgt in der Weise, daß nach der Filtration auf dem Transportband 3 eine gleichmäßige, schichtförmige, gasdurchlässige Feststoffschüttung mit einer Schichtdicke von maximal 50 mm, bevorzugt von maximal 20 mm, vorliegt. Die flüssige Phase wird in den Filtratwannen 5 unterhalb des Transportbands 3 aufgefangen und durch die Filtratleitungen 6 abgezogen. Die Trennung des Feststoffs von der Flüssigkeit erfolgt durch Anlegen einer Druckdifferenz (i.a. Vakuum). Anschließend kann eine Waschung des Filterkuchens 7 erfolgen, bevor er mechanisch auf einen möglichst niedrigen Restfeuchtegehalt entwässert wird (nicht in der Zeichnung dargestellt).

Im Anschluß daran wird der entfeuchtete Filterkuchen auf dem Transportband 3 in den Bandtrockner 2 gefördert. Der Bandtrockner 2 besteht hier im wesentlichen aus einer Heizgaskammer 8 und einem darin eingebauten, über die Walzen 9 geführten Heizband 10. Das hochtemperaturfeste Heizband 10 wird durch Strahlungsheizelemente 11 aufgeheizt, die ebenfalls innerhalb der Heißgaskammer 8 angeordnet sind. Anstelle der Strahlungsheizelemente können auch Heißluftdüsen zur Erwärmung des Heizbandes 10 in der Heißgaskammer eingebaut werden. Das Heizband 10 steht in Längsrichtung mit der Oberfläche des Filterkuchens 7 in Kontakt, so daß ein guter Wärmeübergang von dem Heizband in den Filterkuchen gewährleistet ist. Der Heißgaskammer 8 wird über den Stutzen 12 Heißluft oder Heißdampf zugeführt. Das Heißgas durchströmt den Filterkuchen 7 von oben nach unten und wird zusammen mit den entstehenden Brüden unterhalb des Transportbands 3 durch die Brüdenleitung 13 abgezogen. Nach der Trocknung wird der Feststoff durch den Trocknerausgang 14 ausgeschleust und kann durch einfaches Umlenken des Transportbandes 3 oder durch andere dem Fachmann bekannte Vorrichtungen vom Transportband abgenommen werden. Die Zone des Transportbands 3, auf der vorher der Filterkuchen 7 lag, kann anschließend gereinigt werden, bevor diese Zone wieder zurück in das Bandfilter 1 gefahren wird.

Ein wesentliches Merkmal der Trocknung ist die kombinierte Wärmeeintragung in den Filterkuchen durch Konvektions- und Kontaktheizung. Durch das Heizband 10 wird die Wärme von der Oberseite her in den Filterkuchen 7 eingetragen. Eine weitere Verbesserung des Wärmeeintrags läßt sich erreichen, wenn der Filterkuchen 7 zusätzlich an der Unterseite aufgeheizt wird. Zu diesem Zweck können im Bandtrockner 2 unterhalb des Transportbandes 3 beheizte Filtratwannen 15 eingebaut werden, deren Oberfläche mit der Unterseite des Transportbandes in Kontakt steht. Die Filtratwannen 15 sind mit vertikalen Stegen versehen, auf denen sich das Transportband 3 abstützt. Bei dieser Ausführung muß das Transportband 3 aus einem gut wärmeleitfähigen Material bestehen, da die Wärme von den beheizten Filtratwannen 15 über das Transportband 3 von der Unterseite in den Filterkuchen 7 eingetragen wird. Anstelle eines einzigen Heizbandes 10 können natürlich auch mehrere Heizbandeinheiten hintereinander in der Heißgaskammer 8 hintereinandergeschaltet werden. Ferner ist denkbar, daß auf die oberen Kontaktheizelemente ganz verzichtet wird und der Wärmeeintrag nur von der Unterseite her über die beheizten Filtratwannen 15 erfolgt.

In vielen Fällen ist es erforderlich, daß die schichtförmige Feststoffschüttung bzw. der Filterkuchen 7 nach dem Verlassen des Bandfilters 1 aufgelockert wird, um einen hinreichend niedrigen Strömungswiderstand bei der konvektiven Heißgastrocknung im Bandtrockner 2 sicherzustellen. Zu diesem Zweck ist zwischen dem Bandfilter 1 und dem Bandtrockner 2 eine sich über die gesamte Breite des Transportbandes 3 erstreckende Auflockerungsvorrichtung 16 angebracht. Die Auflockerungsvorrichtung 16 kann z.B. aus rechen- oder stachelwalzenförmigen Rakelelementen bestehen. Das Bandfilter 1 und der Bandtrockner 2 sind zweckmäßig in einem druckfesten gemeinsamen Gehäuse 17 eingeschlossen, so daß beide Apparateeinheiten gekapselt sind. Dies ermöglicht den Betrieb des Filtertrockners bei beliebigen Drücken. Außerdem wird dadurch die notwendige Arbeitshygiene sichergestellt.

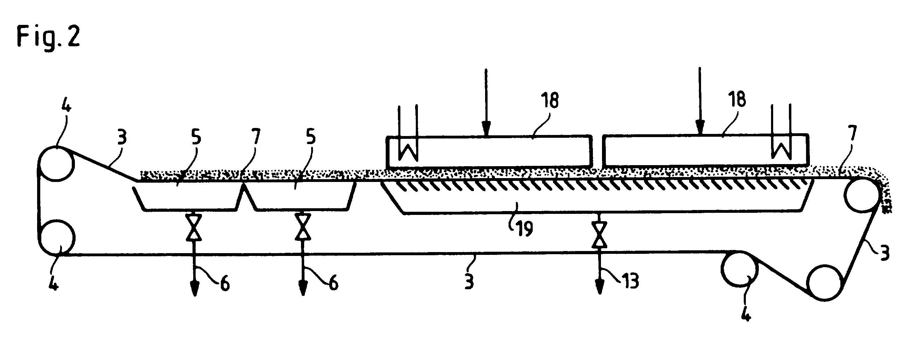

Fig. 2 zeigt eine andere Ausführung des Bandtrockners. Die Kontaktheizelemente bestehen hier aus oberhalb des Transportbandes 3 angeordneten, senkrecht zum Transportband verfahrbaren beheizten Stempeln 18. Die Stempel 18 sind perforiert, damit im Filterkuchen 7 wieder ein Heißgasstrom zur konvektiven Trocknung zugeführt werden kann. An der Unterseite des Transportbandes 3 ist im Bandtrockner (als Option) eine langgestreckte beheizte Filtratwanne 19 für eine zusätzliche Kontaktheizung von der Unterseite her vorgesehen. Im übrigen ist der Filtertrockner nach Fig. 2 analog zu dem nach Fig. 1 aufgebaut. Die Heißgaskammer 8 und das äußere Gehäuse 17 sind aus Gründen der Übersichtlichkeit weggelassen.

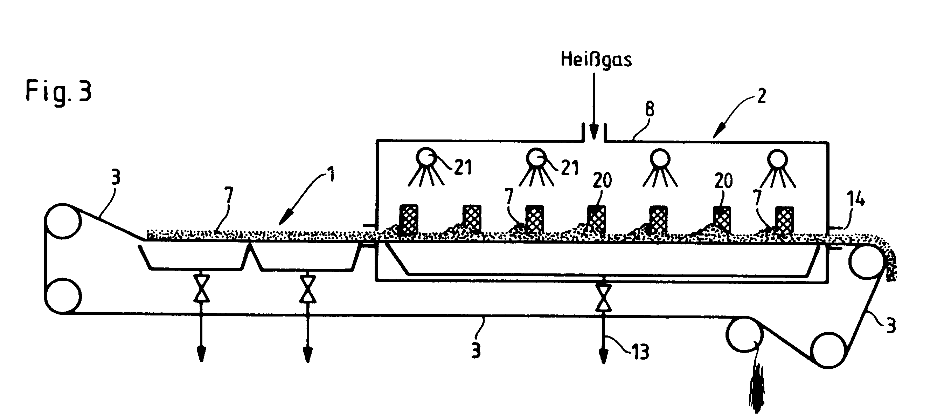

Eine weitere Variante des Filtertrockners ist in Fig. 3 dargestellt. Die Kontaktheizelemente im Bandtrockner 2 bestehen in diesem Fall aus beheizten, pflugscharähnlichen Lamellen 20, die in die Feststoffschüttung hineinragen. Die Pflugscharlamellen 20 sorgen gleichzeitig für eine Auflockerung des Filterkuchens 7. Dadurch wird die im Zusammenhang mit Fig. 1 beschriebene Auflockerungsvorrichtung zwischen Bandfilter 1 und Bandtrockner 2 entbehrlich. Die Pflugscharlamellen 20 werden durch Heizstrahler 21 in der Heißgaskammer 8 beheizt. Die Heizstrahler 21 bewirken auch eine direkte zusätzliche Aufheizung des Filterkuchens 7 durch Strahlungswärme.

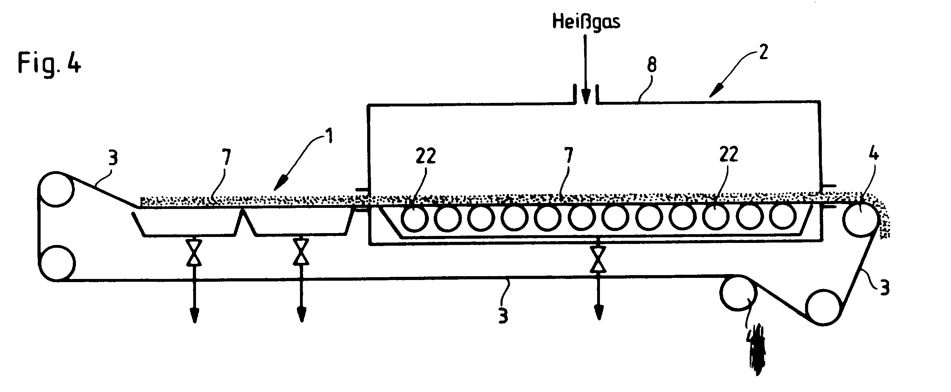

Fig. 4 zeigt eine weitere Ausführungsform des kombinierten Filtertrockners, bei dem die Kontaktheizelemente im Bandtrockner 2 aus beheizten Walzen 22 bestehen. Die Walzen 22 stehen mit dem Transportband 3 in Kontakt; d.h. das Transportband 3 wird im Bandtrockner 2 über die Walzen 22 geführt. Die Walzen können, ähnlich wie die Pflugscharelemente bei der Ausführung nach Fig. 3, durch Strahlungsheizelemente aufgeheizt werden.

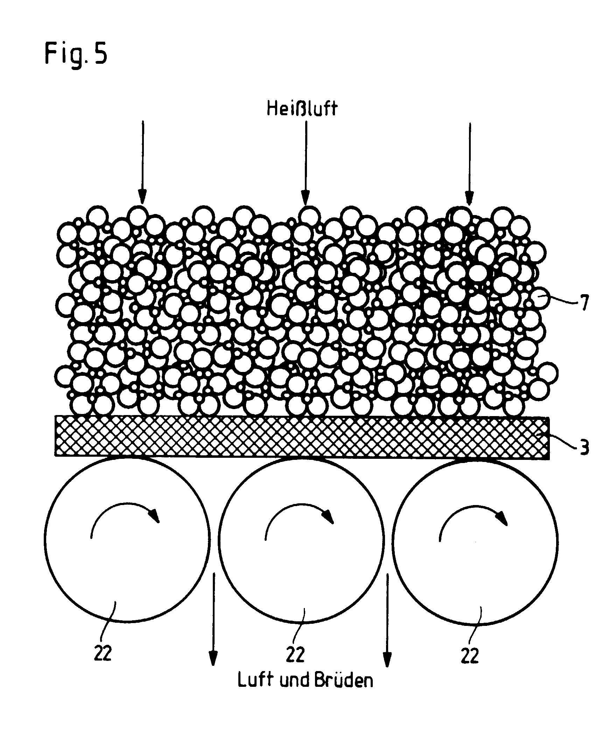

Fig. 5 zeigt den Wärmeeintrag in den Filterkuchen mittels beheizter Walzen noch einmal im Detail. Analog zur Ausführungsform nach Fig. 1 wird der Filterkuchen 7 von oben nach unten von Heißluft durchströmt. Zwischen den Walzen 22 kann die mit Brüden angereicherte Luft abströmen.

Bei den Ausführungen, bei denen die Kontaktheizelemente (Filterwannen 15, beheizte Walzen 22) unterhalb des Transportbandes 3 angeordnet sind, muß das Transportband 3 aus einem Material mit hinreichend guter Wärmeleitfähigkeit bestehen, damit ein guter Wärmeübergang zum Filterkuchen 7 hin besteht. Diese Forderung wird von handelsüblichen Filtertüchern in der Regel erfüllt. Das Filtertuch ist auch für die Heißluft und die aus dem Filterkuchen freigesetzten Brüden durchlässig (Porosität). Bei besonders hohen Anforderungen kann auch eine poröse Metallfolie als Transportband verwendet werden. Das Transportband 3 ist bei allen Ausführungen gemäß Fig. 1 bis 5 durchgehend; d.h. das Transportband 3 ist für die beiden Apparateeinheiten Bandfilter und Bandtrockner gemeinsam. Anstelle eines gemeinsamen Transportbandes können die beiden Apparateeinheiten auch mit getrennten Transportbändern ausgerüstet werden. In diesem Fall muß aber eine Übergabevorrichtung an der Anschlußstelle der beiden Transportbänder vorgesehen werden.

Der kombinierte Filtertrockner gemäß Fig. 1 bis 5 arbeitet quasi kontinuierlich. In einem ersten Arbeitstakt wird z.B. bei ruhendem Transportband das Bandfilter mit der zu behandelnden Feststoffsuspension beschickt und anschließend filtriert. Danach wird das Transportband in Gang gesetzt und der nach der Filtration verbleibende Filterkuchen 7 in den Bandtrockner 2 gefahren. Im zweiten Arbeitstakt wird nun der Filterkuchen 7, wie beschrieben, durch kombinierte Konvektions- und Kontaktheizung getrocknet. Während dieser Zeit kann das Bandfilter bereits wieder mit neuer Feststoffsuspension beschickt werden. Je nach Ausführungsform des kombinierten Filtertrockners wird das Transportband auch kontinuierlich bewegt. Für diesen Fall werden die Kontaktheizelemente vorzugsweise gemäß Fig. 1, 3 und 4 ausgeführt.

Bei dem erfindungsgemäßen Filtertrockner wird mit einem spezifischen Heißluftdurchsatz von 200 bis 5 000 m³_{N}/m² pro h gearbeitet. Der Wärmeeintrag bei der Kontaktheizung beträgt ca. 20 % bis 80 %. Die Temperaturen der heißen Zuluft (Heißgas) betragen maximal 250°, die Temperatur der Kontaktheizelemente ebenfalls maximal 250°C. Die Korngröße des zu trocknenden Produktes hat sich als unkritisch erwiesen (50 µm bis 1000 µm). Die Höhe des nach der Filtration auf dem Transportband verbleibenden Filterkuchens liegt zwischen 3 mm und 50 mm, vorzugsweise zwischen 3 mm und 20 mm. Die Trocknungsdauer für eine Charge beträgt erfahrungsgemäß 5 min bis 20 min.

## Patentansprüche

1. Vorrichtung zum Filtrieren einer Feststoffsuspension und zum Trocknen des verbleibenden Filterkuchens mit einem porösen Transportmedium (3), das durch einen Bandfilter (1) und einen darauffolgenden Bandtrockner (2) mit Heizeinrichtungen zur Wärmeeintragung in den auf dem Transportmedium (3) befindlichen Filterkuchen (7) hindurchgeführt ist, dadurch gekennzeichnet, daß der Filterkuchen (7) nach dem Verlassen des Bandfilters (1) auf dem Transportmedium (3) in Form einer schichtförmigen, gasdurchlässigen Feststoffschüttung mit einer Schichtdicke von maximal 50 mm, vorzugsweise <= 20 mm, vorliegt und daß die Heizeinrichtungen im Bandtrockner (2) einerseits aus einer oberhalb des Transportmediums (3) angeordneten Heißgaskammer (8) zur Erzeugung eines die Feststoffschüttung von oben nach unten durchströmenden Heißgases und andererseits aus einem oder mehreren, ober- und/oder unterhalb des Transportmediums (3) angeordneten Kontaktheizelementen (10, 15, 18, 19, 20, 22) bestehen.

2. Vorrichtung nach Anspruch 1, dadurch gekennzeichnet, daß das Kontaktheizelement aus einem oberhalb des Transportmediums (3) umlaufenden und mit der Feststoffschüttung in Kontakt stehenden, perforierten Heizband (10) besteht.

3. Vorrichtung nach Anspruch 1, dadurch gekennzeichnet, daß die Kontaktheizelemente aus beheizten, oberhalb des Transportmediums (3) angeordneten und senkrecht zum Transportmedium (3) verfahrbaren, perforierten Stempeln (18) bestehen.

4. Vorrichtung nach Anspruch 1, dadurch gekennzeichnet, daß die Kontaktheizelemente aus beheizten, unterhalb des Transportmediums angeordneten, mit Stegen versehenen Filtratwannen (15, 19) bestehen, deren Oberflächen mit dem Transportmedium (3) in Kontakt stehen.

5. Vorrichtung nach Anspruch 1, dadurch gekennzeichnet, daß die Kontaktheizelemente aus beheizten, unterhalb des Transportmediums (3) angeordneten Walzen (22) bestehen, deren Oberflächen mit dem Transportmedium (3) in Kontakt stehen.

6. Vorrichtung nach Anspruch 1 bis 5, dadurch gekennzeichnet, daß zwischen dem Bandfilter (1) und dem Bandtrockner (2) rechen- oder stachelwalzenförmige Rakelelemente (16) zur Auflockerung der Feststoffschüttung angebracht sind.

7. Vorrichtung nach Anspruch 1, dadurch gekennzeichnet, daß die Kontaktheizelemente aus oberhalb des Transportmediums angeordneten, beheizten Lamellen (20) bestehen, die in die Feststoffschüttung hineinragen.

8. Vorrichtung nach Anspruch 1 bis 7, dadurch gekennzeichnet, daß in der Heißgaskammer (8) Heizstrahler (21) für eine zusätzliche Beheizung der Feststoffschüttung durch Strahlungswärme angebracht sind.

9. Vorrichtung nach Anspruch 2, dadurch gekennzeichnet, daß das Transportmedium (3) und das Heizband (10) aus einem bis zu Temperaturen von 230°C hochtemperaturbeständigen Material bestehen.

10. Vorrichtung nach Anspruch 1 bis 9, dadurch gekennzeichnet, daß das Bandfilter (1) und der Bandtrockner (2) von einem gemeinsamen druckfesten Gehäuse (17) umgeben sind.

## Claims

1. Device for filtering a suspension of solids and for drying the remaining filter cake with a porous transport medium (3) which is guided through a belt filter (1) and a following belt dryer (2) with heating devices for introducing heat into the filter cake (7) located on the transport medium (3), characterized in that after leaving the belt filter (1) the filter cake (7) is present on the transport medium (3) in the form of a layer-shaped, gas-permeable heap of solids with a layer thickness of 50 mm maximum, preferably <= 20 mm, and that the heating devices in the belt dryer (2) comprise a hot gas chamber (8) arranged above the transport medium (3) and for generating a hot gas flowing through the heap of solids from top to bottom, on the one hand, and one or more contact heating elements (10, 15, 18, 19, 20, 22) arranged above and/or below the transport medium (3), on the other hand.

2. Device according to Claim 1, characterized in that the contact heating element comprises a perforated heating belt (10) which circulates above the transport medium (3) and is in contact with the heap of solids.

3. Device according to Claim 1, characterized in that the contact heating elements comprise heated, perforated dies (18) which are arranged above the transport medium (3) and can be moved perpendicular to the transport medium (3).

4. Device according to Claim 1, characterized in that the contact heating elements comprise heated filtrate troughs (15, 19) which are arranged underneath the transport medium (3), are provided with webs and whose surfaces are in contact with the transport medium (3).

5. Device according to Claim 1, characterized in that the contact heating elements comprise heated rollers (22) which are arranged underneath the transport medium (3) and whose surfaces are in contact with the transport medium (3).

6. Device according to Claim 1 to 5, characterized in that rake or spiked roller shaped rake elements (16) are fitted between the belt filter (1) and the belt dryer (2) to loosen the heap of solids.

7. Device according to Claim 1, characterized in that the contact heating elements comprise heated vanes (20) which are arranged above the transport medium and project into the heap of solids.

8. Device according to Claim 1 to 7, characterized in that radiant heaters (21) are fitted in the hot gas chamber (8) for an additional heating of the heap of solids by means of radiant heat.

9. Device according to Claim 2, characterized in that the transport medium (3) and the heating belt (10) comprise a material that is high-temperature resistant up to temperatures of 230 °C.

10. Device according to Claim 1 to 9, characterized in that the belt filter (1) and the belt dryer (2) are surrounded by a common pressure-resistant housing (17).

## Revendications

1. Dispositif pour filtrer une suspension de solides et pour sécher le gâteau de filtration restant, comportant un milieu de transport poreux (3), qui est amené à traverser un filtre à bande (1) et un sécheur à bande (2) successif avec des dispositifs de chauffage pour l'introduction de chaleur dans le gâteau de filtration (7) situé sur le milieu de transport (3), caractérisé en ce que le gâteau de filtration (7), après avoir quitté le filtre à bande (1), est situé sur le milieu de transport (3) sous forme d'une masse de solides en vrac en forme de couche, perméable aux gaz, ayant une épaisseur de couche d'au maximum 50 mm, de préférence inférieure ou égale à 20 mm, et en ce que les dispositifs de chauffage dans le sécheur à bande (2) consistent d'une part en une chambre à gaz chaud (8) disposée au-dessus du milieu de transport (3) pour produire un gaz chaud traversant la masse de solides en vrac de haut en bas et d'autre part en un ou plusieurs éléments de chauffage par contact (10, 15, 18, 19, 20, 22) disposés au-dessus et/ou au-dessous du milieu de transport (3).

2. Dispositif selon la revendication 1, caractérisé en ce que l'élément de chauffage par contact consiste en une bande chauffante perforée qui circule au-dessus du milieu de transport (3) et qui est en contact avec la masse de solides en vrac.

3. Dispositif selon la revendication 1, caractérisé en ce que les éléments de chauffage par contact consistent en pistons (18) perforés, chauffés, disposés au-dessus du milieu de transport (3) et déplaçables perpendiculairement au milieu de transport (3).

4. Dispositif selon la revendication 1, caractérisé en ce que les éléments de chauffage par contact consistent en auges à filtrat (15, 19) chauffées, disposées au-dessous du milieu de transport, munies de nervures, dont les surfaces sont en contact avec le milieu de transport (3).

5. Dispositif selon la revendication 1, caractérisé en ce que les éléments de chauffage par contact consistent en cylindres (22) chauffés, disposés au-dessous du milieu de transport (3), dont les surfaces sont en contact avec le milieu de transport (3).

6. Dispositif selon les revendications 1 à 5, caractérisé en ce que des éléments racleurs (16) en forme de râteaux ou de cylindres à pointes sont disposés entre le filtre à bande (1) et le sécheur à bande (2) pour l'ameublissement de la masse de solides en vrac.

7. Dispositif selon la revendication 1, caractérisé en ce que les éléments de chauffage par contact consistent en lamelles (20) chauffées, disposées au-dessus du milieu de transport, qui pénètrent dans la masse de solides en vrac.

8. Dispositif selon les revendications 1 à 7, caractérisé en ce que des radiateurs chauffants (21) sont disposés dans la chambre à gaz chaud (8) pour un chauffage supplémentaire de la masse de solides en vrac par la chaleur de rayonnement.

9. Dispositif selon la revendication 2, caractérisé en ce que le milieu de transport (3) et la bande chauffante (10) consistent en un matériau résistant aux hautes températures jusqu'à des températures de 230°C.

10. Dispositif selon les revendications 1 à 9, caractérisé en ce que le filtre à bande (1) et le sécheur à bande (2) sont entourés par un boîtier (17) commun résistant à la pression.
